# EUROPÄISCHE PATENTSCHRIFT

(11) **EP 3 310 598 B1**
(45) Veröffentlichungstag und Bekanntmachung des Hinweises auf die Patenterteilung: **19.02.2020**
(21) Anmeldenummer: 16716878.0
(22) Anmeldetag: 18.04.2016
(51) Int. Cl.: B60J 1/20

(54) **BESCHATTUNGSVORRICHTUNG FÜR EINE SCHEIBE EINES KRAFTFAHRZEUGS**
SHADING DEVICE FOR A WINDOW OF A MOTOR VEHICLE
DISPOSITIF D'OMBRAGE POUR UNE VITRE D'UN VÉHICULE AUTOMOBILE

(30) Priorität: 18.06.2015 DE 102015211293
(43) Veröffentlichungstag der Anmeldung: 25.04.2018
(73) Patentinhaber: BOS GmbH & Co. KG, 73760 Ostfildern (DE)
(72) Erfinder: MAIER, Matthias, 73733 Esslingen (DE); KLETT, Volker, 70192 Stuttgart (DE)
(74) Vertreter: Patentanwälte Ruff, Wilhelm, Beier, Dauster & Partner mbB
(86) Internationale Anmeldenummer: PCT/EP2016/058515
(87) Internationale Veröffentlichungsnummer: WO 2016/202482

(56) Entgegenhaltungen:
- EP-A1- 1 418 073
- EP-A2- 2 614 974
- DE-A1-102013 006 761
- US-A1- 2012 180 960

## Beschreibung

Die Erfindung betrifft eine Beschattungsvorrichtung für eine Scheibe eines Kraftfahrzeugs mit einem flexiblen Flächengebilde, das zwischen einer aufgewickelten Ruheposition und einer aufgespannten Schutzposition auf einer Wickelwelle auf- und abwickelbar gehalten ist, die in einem fahrzeugfesten Aufnahmeraum drehbar gelagert ist, der durch ein Schließteil verschließbar ist, das zwischen einer Schließstellung und wenigstens einer Öffnungsstellung schwenkbeweglich gelagert ist, wobei das Flächengebilde an seinem in Abwickelrichtung vorderen Stirnendbereich mit einem formstabilen Auszugprofil versehen ist, das mittels eines Antriebssystems längs der Scheibe parallelverlagerbar ist.

Eine derartige Beschattungsvorrichtung ist für eine Seitenscheibe oder eine Heckscheibe eines Personenkraftwagens allgemein bekannt, wie zum Beispiel aus DE 10 2013 006 761 A1. Die Beschattungsvorrichtung weist ein flexibles Flächengebilde auf, das auf einer Wickelwelle auf- und abwickelbar gehalten ist. Die Wickelwelle ist in einem Kassettengehäuse drehbar gelagert. Das flexible Flächengebilde wird zur Beschattung der Scheibe aus dem Kassettengehäuse ausgezogen und entlang der Scheibe aufgespannt. Das Kassettengehäuse ist unterhalb der Scheibe fahrzeugfest gehalten. Das Kassettengehäuse weist einen Durchtrittschlitz auf, der eine Öffnung des Kassettengehäuses nach oben definiert. In einer Ruheposition ist das Flächengebilde vollständig auf die Wickelwelle aufgewickelt und das Auszugprofil ist im Bereich des Durchtrittschlitzes in dem Kassettengehäuse abgelegt. Die Öffnung des Kassettengehäuses ist durch ein Schließteil verschließbar, das als Klappe gestaltet und schwenkbeweglich an einem entsprechenden Funktionsteil des Fahrzeuginnenraums gelagert ist. Das Schließteil verschließt die Öffnung des Kassettengehäuses in der Ruheposition des Flächengebildes und wird in seine Öffnungsstellung überführt, wenn das Auszugprofil und das Flächengebilde aus dem Durchtrittschlitz nach oben zur Scheibe hin ausgefahren werden. In der aufgespannten Schutzposition des Flächengebildes verbleibt das Schließteil in seiner Öffnungsstellung.

Aufgabe der Erfindung ist es, eine Beschattungsvorrichtung der eingangs genannten Art zu schaffen, die mit einfachen Mitteln ein verschleißarmes Ein- und Ausziehen des Flächengebildes relativ zu dem Aufnahmeraum und relativ zu dem Schließteil ermöglicht.

Diese Aufgabe wird dadurch gelöst, dass das Schließteil mittels einer Steuermechanik zwischen zwei unterschiedlichen Öffnungsstellungen zwangsgesteuert ist, von denen eine erste Öffnungsstellung eine Öffnung freigibt, die ein Hindurchtreten des Auszugprofils ermöglicht, und eine zweite Öffnungsstellung eine reduzierte Öffnung freigibt, die ausreichend groß gewählt ist, um ein berührungsloses Hindurchtreten des flexiblen Flächengebildes zu ermöglichen. Die erfindungsgemäße Lösung eignet sich in besonders vorteilhafter Weise zur Beschattung einer Heckscheibe eines Personenkraftwagens, bei der ein fahrzeugfester Aufnahmeraum in Form eines Kassettengehäuses unterhalb einer Hutablage positioniert ist und eine Öffnung des Aufnahmeraums zum Fahrzeuginnenraum hin durch ein Schließteil in Form einer Schließklappe verschlossen ist. Entsprechend der Neigung der Heckscheibe wird das flexible Flächengebilde in seine Schutzposition schräg nach oben ausgezogen und schräg nach unten wieder zurückgeführt. Das Antriebssystem umfasst vorzugsweise einen Elektromotor, der mittels eines geeigneten Getriebes synchron zwei Zug-Druck-Stränge antreibt, die mit einem Stirnendbereich an gegenüberliegenden Stirnseiten des Auszugprofils angreifen und so eine Längsverlagerung des Auszugprofils zwischen der Ruheposition des Flächengebildes und der Schutzposition des Flächengebildes ermöglichen.

Die beiden Öffnungsstellungen, die erfindungsgemäß durch die Steuermechanik definiert sind, dienen zum einen dazu, das gegenüber dem dünnen Flächengebilde wesentlich dickere Auszugprofil an dem Schließteil vorbeiführen zu können, ohne dass das Auszugprofil das Schließteil berührt. Zum anderen soll das Schließteil auch nach dem Vorbeiführen des Auszugprofils in Auszugrichtung in einer gegenüber der ersten Öffnungsstellung reduzierten Öffnungsstellung verbleiben, um zu gewährleisten, dass das Schließteil mit einer entsprechenden Randkante während einer weiteren Auszugbewegung des Flächengebildes in Abstand zu dem Flächengebilde verbleibt. Dadurch, dass das Schließteil in berührungslosem Abstand zu dem Flächengebilde gehalten bleibt, kann das Flächengebilde nicht beschädigt werden und durch das Vorbeigleiten an dem Schließteil auch nicht einem erhöhten Verschleiß ausgesetzt werden.

In Ausgestaltung der Erfindung ist die Steuermechanik einem Hebelarm des Schließteils zugeordnet. Der Hebelarm erstreckt sich vorzugsweise im Bereich einer Scharnieranordnung des Schließteils und ist dazu vorgesehen, eine Hebelwirkung und demzufolge ein Drehmoment auf das Schließteil auszuüben. Das Schließteil ist vorzugsweise mittels einer Federeinrichtung in seiner Schließstellung gehalten. Die auf den Hebelarm wirkende Steuermechanik übt ein Drehmoment entgegen des Drehmoments der Federeinrichtung auf das Schließteil aus.

In weiterer Ausgestaltung der Erfindung weist die Steuermechanik eine im Bereich des Hebelarms angeordnete Steuerkulisse sowie einen entlang der Steuerkulisse beweglichen Steuernocken auf, wobei die Steuerkulisse verschiedene Kulissenbahnabschnitte aufweist, die die beiden Öffnungsstellungen des Schließteils definieren. Die Kulissenbahnabschnitte gehen vorzugsweise fließend ineinander über, so dass sich keine Stufenabsätze zwischen den verschiedenen Kulissenbahnabschnitten ergeben.

In weiterer Ausgestaltung der Erfindung ist die Steuerkulisse an dem Hebelarm angeordnet. Vorzugsweise erstreckt sich die Steuerkulisse zumindest weitgehend parallel zu einer Schwenkachse des Schließteils.

In weiterer Ausgestaltung der Erfindung ist die Steuerkulisse an einer Führungsbahn für den Steuernocken angeordnet. Dies entspricht einer kinematischen Umkehr zu der Anordnung der Steuerkulisse an dem Hebelarm.

In weiterer Ausgestaltung der Erfindung weist das Antriebssystem zwei biegbare, längserstreckte Zug-Druck-Stränge auf, die an einem Stirnendbereich mit dem Auszugprofil für eine Parallelverlagerung in Wirkverbindung sind, wobei wenigstens ein Zug-Druck-Strang mit seinem gegenüberliegenden Stirnendbereich in einer Steuerführung im Bereich des Hebelarms geführt ist. Der gegenüberliegende Stirnendbereich des Zug-Druck-Strangs wird demzufolge als Teil der Steuermechanik eingesetzt.

Als Zug-Druck-Strang ist ein flexibles Mittel zu verstehen, das längserstreckt ist und Zug- sowie Druckkräfte übertragen kann, wie eine Zahnstange, ein Bowdenzug oder eine Gewindewelle.

In weiterer Ausgestaltung der Erfindung ist der Stirnendbereich des Zug-Druck-Strangs mit dem Steuernocken versehen. Durch die Nutzung des Zug-Druck-Strangs des Antriebssystems für die Steuermechanik sind keine zusätzlichen Antriebsmittel notwendig. Diese Ausgestaltung ist vorteilhaft, wenn die Steuermechanik lediglich im Ein- und Ausfahrbereich des Auszugprofils wirksam ist. Der Stützanschlag gewährleistet, dass das Schließteil auch ohne die Wirksamkeit der Steuermechanik in einer der beiden Öffnungsstellungen gehalten wird.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in einer Seitenansicht eine Ausführungsform einer erfindungsgemäßen Beschattungsvorrichtung,
- Fig. 2 bis 4: die Beschattungsvorrichtung nach Fig. 1 in unterschiedlichen Funktionsstellungen,
- Fig. 5: in vergrößerter perspektivischer Darstellung die Beschattungsvorrichtung nach den Fig. 1 bis 4 in einer Funktionsstellung gemäß Fig. 4 und
- Fig. 6: in einer weiteren perspektivischen und vergrößerten Darstellung einen Ausschnitt der Beschattungsvorrichtung nach Fig. 5.

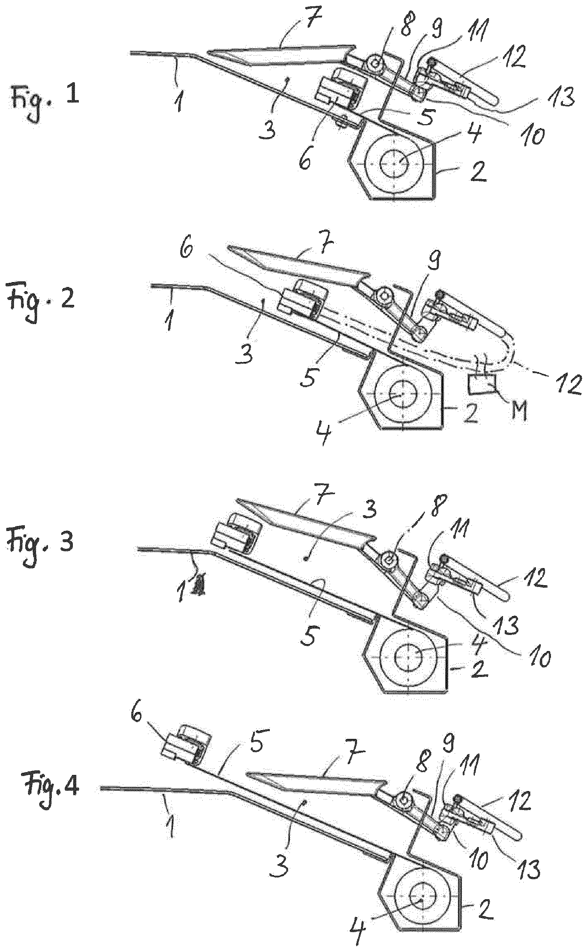

Eine Beschattungsvorrichtung nach den Fig. 1 bis 6 ist im Bereich einer Hutablage 1 unterhalb einer Heckscheibe eines Personenkraftwagens positioniert. Die Beschattungsvorrichtung weist ein flexibles Flächengebilde 5 auf, das auf einer Wickelwelle auf- und abwickelbar gehalten ist. Die Wickelwelle 4 ist in einem Aufnahmeraum in Form eines Kassettengehäuses 2 drehbar gelagert. Auf die Wickelwelle 4 wirkt vorzugsweise eine Wickelfeder in Aufwickelrichtung. Das Kassettengehäuse 2 ist über einen Durchtrittschlitz und eine Öffnung 3 zu einem Fahrzeuginnenraum des Personenkraftwagens hin offen. Die Öffnung 3 ist durch ein Schließteil in Form einer Klappe 7 verschließbar, die um eine in Fahrzeugquerrichtung erstreckte Schwenkachse 8 schwenkbeweglich gelagert ist. Die Schwenkachse 8 verläuft parallel oberhalb einer Drehachse der Wickelwelle 4. Ein in Auszugrichtung vorderer Stirnendbereich des flexiblen Flächengebildes 5 ist mit einem formstabilen Auszugprofil 6 versehen. Das Auszugprofil 6 ist durch ein Antriebssystem 12, M in eine die Heckscheibe beschattende Schutzposition des Flächengebildes 5 sowie in eine in die Öffnung 3 unterhalb des Schließteils 7 eingefahrene Ruheposition des Flächengebildes 5 und des Auszugprofils 6 überführbar. Das Antriebssystem weist zwei Zug-Druck-Stränge in Form flexibler Gewindewellen auf, die auch als Flexwellen 12 bezeichnet werden. Anhand der Fig. 2 ist schematisch ein Verlauf einer Flexwelle 12 gezeigt. Die gezeigte Flexwelle 12 greift an einer relativ zur Zeichnungsebene rückseitigen Stirnseite des Auszugprofils 6 an dem Auszugprofil an. Beide Flexwellen 12 sind in nicht dargestellten Führungsschienen auf gegenüberliegenden Seiten der Heckscheibe linearbeweglich geführt, in denen auch die Stirnseiten des Auszugprofils 6 verschiebbar geführt sind.

Das Schließteil 7 wird durch eine nicht dargestellte Federeinrichtung permanent in seiner Schließstellung gemäß Fig. 1 gehalten, solange keine anderen und entgegengerichtet wirkenden Kräfte oder Drehmomente auf das Schließteil 7 wirken.

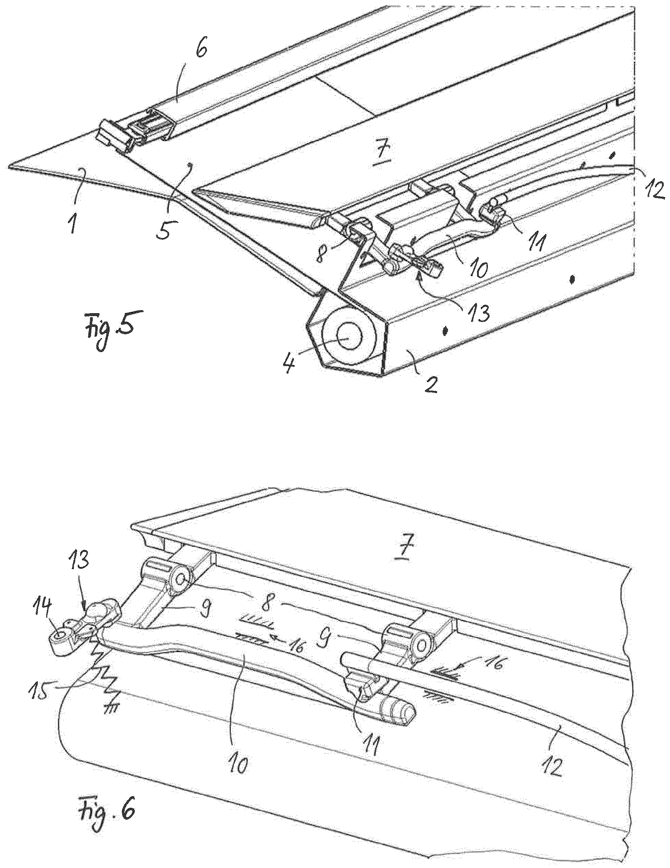

Erfindungsgemäß wird das Schließteil 7 zwangsläufig in zwei unterschiedliche Öffnungsstellungen überführt, wenn das Auszugprofil 6 aus der Ruheposition gemäß Fig. 1 nach oben ausgefahren wird oder wieder aus einer ausgefahrenen Funktionsstellung zurück in Richtung der Ruheposition verfahren wird. Hierzu ist dem Schließteil 7 eine Steuermechanik zugeordnet, die nachfolgend näher beschrieben wird. Das Schließteil 7 ist im Bereich der Schwenkachse 8 durch eine Scharnieranordnung fahrzeugseitig schwenkbeweglich gelagert. Im Bereich der Scharnieranordnung erstreckt sich ein Hebelarm 9, der durch zwei Hebelarmabschnitte gebildet wird, die parallel zueinander beabstandet sind, entgegengerichtet zu dem Schließteil 7 von der Scharnieranordnung und demzufolge von der Schwenkachse 8 weg. Freie Endbereiche der Hebelarmabschnitte 9 sind über einen Querträger miteinander verbunden, der als Steuerkulisse 10 gestaltet ist. Die Steuerkulisse 10 wird durch ein längserstrecktes Profilelement gebildet, das zweifach gekrümmt ist, wodurch sich über die Länge des Profilabschnitts ein mittlerer Kulissenabschnitt sowie zwei äußere Kulissenabschnitte ergeben, die über Krümmungsabschnitte bündig und fluchtend ineinander übergehen (Fig. 6). Die Steuerkulisse 10 erstreckt sich im Wesentlichen parallel zu der Schwenkachse 8. Oberhalb der Steuerkulisse 10 erstreckt sich eine geradlinige Steuerführung 16, die in Fig. 6 lediglich schematisch angedeutet ist. Die Steuerführung ist als fahrzeugfest angeordneter Führungskanal oder als fahrzeugfest angeordnete Führungsnut für die Flexwelle 12 gestaltet. Die Steuerführung 16 erstreckt sich parallel zur Schwenkachse 8.

Ein zu dem Auszugprofil 6 gegenüberliegender Stirnendbereich der Flexwelle 12 ist mit einem Steuernocken 11 versehen, der nach unten aus der entsprechend offen gestalteten Steuerführung 16 herausragt und gemeinsam mit der Flexwelle 12 in der Steuerführung 16 längsverschiebbar ist. Der Steuernocken 11 wirkt mit der Steuerkontur der Steuerkulisse 10 zusammen. Da die Flexwelle 12 über die geradlinige und parallel zur Schwenkachse 8 verlaufende Steuerführung 16 geradlinig geführt ist, wird auch der Steuernocken 11 entsprechend geradlinig geführt. Da der mittlere Kulissenabschnitt der Steuerkulisse 10 näher an der Steuerführung 16 positioniert ist als die beiden gegenüberliegenden, äußeren Kulissenabschnitte, drückt der Steuernocken 11 beim Entlanggleiten an der Steuerkontur der Steuerkulisse 10 das Schließteil 7 zwangsläufig im mittleren Kulissenabschnitt weiter nach oben. Der Steuernocken 11 weist eine Anlaufschräge auf, um auf das in Fig. 6 linke Stirnende der Steuerkulisse 10 auflaufen und dieses nach unten drücken zu können. In der Ruheposition des Auszugprofils 6 gemäß Fig. 1 befindet sich der den Steuernocken 11 tragende Stirnendbereich der Flexwelle 12 gemäß den Darstellungen nach den Fig. 5 und 6 seitlich links neben der Steuerkulisse 10. Sobald ein Elektromotor M des Antriebssystems die Flexwellen 12 über das entsprechende Getriebe in Längsrichtung verlagert, nehmen die Flexwellen 12 das Auszugprofil 6 in Richtung der Schutzposition nach oben mit. Dabei bewegt sich die Flexwelle 12 gemäß den Fig. 5 und 6 zwangsläufig von links nach rechts, wodurch der Steuernocken 11 auf dem linken äußeren Kulissenabschnitt der Steuerkulisse 10 zur Anlage kommt und das Schließteil 7 in eine erste Öffnungsstellung überführt. Bei einem Weiterbewegen der Flexwelle 12 nach rechts kommt der Steuernocken 11 zwangsläufig über den Krümmungsabschnitt auf dem mittleren Kulissenabschnitt zur Anlage, wodurch das Schließteil 7 in seine zweite Öffnungsstellung gemäß Fig. 3 verlagert wird. Die Länge und Anordnung der Kulissenabschnitte der Steuerkulisse 10 ist derart auf den Verlagerungsweg des Auszugprofils 6 abgestimmt, dass das Schließteil 7 sich in dieser zweiten Öffnungsstellung befindet, wenn das Auszugprofil 6 unter dem Schließteil 7 hindurch ins Fahrzeuginnere austritt. Anschließend kommt der Steuernocken 11 auf dem äußeren, in Fig. 6 rechten Kulissenabschnitt zur Anlage, wodurch die Federeinrichtung das Schließteil 7 zwangsläufig wieder in die erste Öffnungsstellung zurückführt, die näher an der Hutablage 1 liegt als die zweite Öffnungsstellung gemäß Fig. 3.

Bei einer weiteren Ausfahrbewegung des Auszugprofils 6 verlässt der Steuernocken 11 die Steuerkulisse 10.

Um zu vermeiden, dass nach dem Entfernen des Steuernockens 11 von der Steuerkulisse 10 das Schließteil 7 in die vollständige Schließstellung gemäß Fig. 1 durch die Federeinrichtung zurückgeschwenkt wird, ist der Steuerkulisse 10 ein Stützanschlag 13 zugeordnet, der als um eine Drehachse 14 an einem fahrzeugfesten Funktionsteil drehbeweglich gelagerter Drehhebel gestaltet ist. Der Drehhebel 13 ist durch eine Federeinheit 15 in einer Drehrichtung nach rechts (auf die Darstellungen in den Fig. 5 und 6 bezogen) permanent drehmomentbeaufschlagt. Der Stützanschlag 13 liegt in dem Bewegungsweg des Steuernockens 11 und der Flexwelle 12. Solange der Steuernocken 11 und die Flexwelle 12 sich in der Ruheposition befinden, drückt der Steuernocken 11 den Stützanschlag 13 in eine Ruhestellung nach links, in der er außer Eingriff zu der Steuerkulisse 10 ist. Wenn der Steuernocken 11 gemeinsam mit der Flexwelle 12 in der Steuerführung 16 nach rechts verlagert wird, dreht die Federeinheit 15 den Stützanschlag 13 zwangsläufig nach rechts mit, bis der Stützanschlag 13 sich oberhalb des äußeren Kulissenabschnitts der Steuerkulisse 10 befindet. Wenn nun der Steuernocken 11 durch die Verlagerung der Flexwelle 12 gemeinsam mit dem Auszugprofil 6 nach oben von der Steuerkulisse 10 entfernt wird, zieht die nicht dargestellte Federeinrichtung das Schließteil 7 zwangsläufig wieder in Richtung seiner Schließstellung. Dabei kommt der linke äußere Kulissenabschnitt der Steuerkulisse 10 von unten an dem Stützanschlag 13 zur Anlage, wodurch das Schließteil 7 in einer Öffnungsstellung gemäß Fig. 4 gehalten wird. Diese Öffnungsstellung ist derart gestaltet, dass das Schließteil 7 zu dem Flächengebilde 5 in Abstand verbleibt, während dieses nach oben in Richtung der Schutzposition ausgezogen wird. Die Flexwelle 12 ist, wie anhand der Fig. 2 schematisch dargestellt ist, von der parallelen Ausrichtung neben dem Flächengebilde 5 zur Querausrichtung im Bereich der Steuerführung 16 gekrümmt und umgelenkt. Da die Flexwelle 12 jedoch eine entsprechende elastische Flexibilität aufweist, ist eine derartige Umlenkung und Krümmung ohne Beschädigung oder übermäßige Belastung der Flexwelle 12 möglich. Solange das Auszugprofil 6 in der ausgezogenen Schutzposition des Flächengebildes 5 verbleibt, stützt der Stützanschlag 13 das Schließteil 7 in der Öffnungsstellung gemäß Fig. 4. Wenn das Auszugprofil 6 und das Flächengebilde 5 wieder in Richtung der Ruheposition gemäß Fig. 1 zurückgeführt werden, wird auch die Flexwelle 12 wieder in entsprechender Weise zurückgeführt. Dabei kommt der Steuernocken 11 zwangsläufig wieder kurz vor dem Bereich, in dem das Schließteil 7 sich in dem Bewegungsweg des Auszugprofils 6 befindet, an dem rechten äußeren Kulissenabschnitt der Steuerkulissen 10 zur Anlage und verfährt entsprechend umgekehrt entlang der Steuerkulisse 10, wodurch das Schließteil 7 wieder gemäß Fig. 3 aufgeschwenkt wird und das Auszugprofil 6 berührungslos in die Öffnung 3 hineinfahren kann. Sobald der Steuernocken 11 den Stützanschlag 13 erreicht hat, drückt der Steuernocken 11 den Stützanschlag 13 wieder gegen die Federkraft der Federeinheit 15 nach links. Wenn der Steuernocken 11 nach links über den linken Kulissenabschnitt der Steuerkulisse 10 hinweggefahren ist, ist die Steuerkulisse 10 durch den Steuernocken 11 vollständig freigegeben, so dass das Schließteil 7 durch die Federeinrichtung wieder in die Schließstellung gemäß Fig. 1 verschwenkt wird.

## Patentansprüche

1. Beschattungsvorrichtung für eine Scheibe eines Kraftfahrzeugs mit einem flexiblen Flächengebilde (5), das zwischen einer aufgewickelten Ruheposition und einer aufgespannten Schutzposition auf einer Wickelwelle (4) auf- und abwickelbar gehalten ist, die in einem fahrzeugfesten Aufnahmeraum (2) drehbar gelagert ist, der durch ein Schließteil (7) verschließbar ist, das zwischen einer Schließstellung und wenigstens einer Öffnungsstellung schwenkbeweglich gelagert ist und das durch eine Federeinrichtung permanent in der Schließstellung gehalten ist, solange keine anderen und entgegengerichtet wirkenden Kräfte oder Drehmomente auf das Schließteil (7) wirken, wobei das Flächengebilde (5) an seinem in Abwickelrichtung vorderen Stirnendbereich mit einem formstabilen Auszugprofil (6) versehen ist, das mittels eines Antriebssystems (12, M) längs der Scheibe parallelverlagerbar ist, **dadurch gekennzeichnet, dass** das Schließteil (7) mittels einer Steuermechanik zwischen wenigstens zwei unterschiedlichen Öffnungsstellungen zwangsgesteuert ist, von denen eine erste Öffnungsstellung eine Öffnung freigibt, die ein Hindurchtreten des Auszugprofils (6) ermöglicht, und eine zweite Öffnungsstellung eine reduzierte Öffnung freigibt, die ausreichend groß gewählt ist, um ein berührungsloses Hindurchtreten des flexiblen Flächengebildes (5) zu ermöglichen.

2. Beschattungsvorrichtung nach Anspruch 1, **dadurch gekennzeichnet, dass** die Steuermechanik einem Hebelarm (9) des Schließteils (7) zugeordnet ist.

3. Beschattungsvorrichtung nach Anspruch 2, **dadurch gekennzeichnet, dass** die Steuermechanik eine im Bereich des Hebelarms (9) angeordnete Steuerkulisse (10) sowie einen entlang der Steuerkulisse (10) beweglichen Steuernocken (11) aufweist, wobei die Steuerkulisse (10) verschiedene Kulissenbahnabschnitte aufweist, die die beiden Öffnungsstellungen des Schließteils (7) definieren.

4. Beschattungsvorrichtung nach Anspruch 3, **dadurch gekennzeichnet, dass** die Steuerkulisse (10) an dem Hebelarm (9) angeordnet ist.

5. Beschattungsvorrichtung nach einem der vorhergehenden Ansprüche, **dadurch gekennzeichnet, dass** die Steuerkulisse an einer Führungsbahn für den Steuernocken angeordnet ist.

6. Beschattungsvorrichtung nach wenigstens einem der vorhergehenden Ansprüche, **dadurch gekennzeichnet, dass** das Antriebssystem zwei biegbare, längserstreckte Zug-Druck-Stränge (12) aufweist, die an einem Stirnendbereich mit dem Auszugprofil (6) für eine Parallelverlagerung in Wirkverbindung sind, wobei wenigstens ein Zug-Druck-Strang (12) mit seinem gegenüberliegenden Stirnendbereich in einer Steuerführung (16) im Bereich des Hebelarms (9) geführt ist.

7. Beschattungsvorrichtung nach Anspruch 6, **dadurch gekennzeichnet, dass** der Stirnendbereich des Zug-Druck-Strangs (12) mit dem Steuernocken (11) versehen ist.

8. Beschattungsvorrichtung nach einem der vorhergehenden Ansprüche, **dadurch gekennzeichnet, dass** die Steuerführung die Kulissenbahnabschnitte der Steuerkulisse aufweist.

9. Beschattungsvorrichtung nach einem der vorhergehenden Ansprüche, **dadurch gekennzeichnet, dass** ein durch den Stirnendbereich des Zug-Druck-Strangs (12) aktivierbarer und deaktivierbarer Stützanschlag (13) vorgesehen ist, der das Schließteil (7) in einer der beiden Öffnungsstellungen hält.

## Claims

1. Shading device for a window of a motor vehicle, with a flexible sheet-like structure (5) which is held on a winding shaft (4) so as to be able to be wound up and unwound between a wound-up inoperative position and a stretched protective position, which winding shaft is mounted rotatably in a vehicle-mounted receiving space (2) which is closable by a closing part (7) which is mounted pivotably between a closed position and at least one opening position and which is held permanently in the closed position by means of a spring device, as long as no other and oppositely acting forces or torques act on the closing part (7), wherein the sheet-like structure (5) is provided at its front end region in the unwinding direction with a dimensionally stable pull-out profile (6) which is shiftable in parallel along the window by means of a drive system (12, M),
**characterized in that**
the closing part (7) is forcibly controlled by means of a control mechanism between at least two different opening positions, of which a first opening position opens up an opening permitting passage of the pull-out profile (6), and a second opening position opens up a reduced opening which is selected to be of a size sufficient in order to permit the flexible sheet-like structure (5) to pass through without contact.

2. Shading device according to claim 1, **characterized in that** the control mechanism is assigned to a lever arm (9) of the closing part (7).

3. Shading device according to claim 2, **characterized in that** the control mechanism has a control link (10) arranged in the region of the lever arm (9) and a control cam (11) which is movable along the control link (10), wherein the control link (10) has various link track portions which define the two opening positions of the closing part (7).

4. Shading device according to claim 3, **characterized in that** the control link (10) is arranged on the lever arm (9).

5. Shading device according to any of the preceding claims, **characterized in that** the control link is arranged on a guide track for the control cam.

6. Shading device according to at least one of the preceding claims, **characterized in that** the drive system has two bendable, longitudinally extending pull-push strands (12) which are operatively connected at an end region to the pull-out profile (6) for parallel shifting, wherein at least one pull-push strand (12) is guided by its opposite end region in a control guide (16) in the region of the lever arm (9).

7. Shading device according to claim 6, **characterized in that** the end region of the pull-push strand (12) is provided with the control cam (11).

8. Shading device according to any of the preceding claims, **characterized in that** the control guide has the link track portions of the control link.

9. Shading device according to any of the preceding claims, **characterized in that** a supporting stop (13) which can be activated and deactivated by the end region of the pull-push strand (12) is provided, said supporting stop holding the closing part (7) in one of the two opening positions.

## Revendications

1. Dispositif d'ombrage pour une vitre d'un véhicule automobile avec une structure plane (5) flexible, retenue sur un arbre d'enroulement (4) de manière enroulable et déroulable entre une position de repos enroulée et une position de protection tendue, l'arbre d'enroulement monté tournant dans un espace de logement (2) fixé au véhicule, le logement pouvant être fermé par une pièce de fermeture (7) montée pivotante entre une position de fermeture et au moins une position d'ouverture et retenue dans la position de fermeture en permanence par un dispositif de ressort aussi longtemps que pas d'autres et contraires forces ou couples agissent sur la pièce de fermeture (7), la structure plane (5) étant pourvue d'un profilé de tirage (6) sur sa face d'extrémité frontale avant dans la direction de déroulement, le profilé de tirage étant déplaçable parallèlement par le biais d'un système d'entraînement (12, M) le long de la vitre,
**caractérisé en ce que**
la pièce de fermeture (7) est guidé forcément par le biais d'un mécanisme de commande entre au moins deux positions d'ouverture différentes, dont une première position d'ouverture découvre une ouverture permettant un passage du profilé de tirage (6), et une deuxième position d'ouverture découvre une ouverture réduite, sélectionnée de taille suffisante afin de permettre un passage sans contact de la structure plane (5) flexible.

2. Dispositif d'ombrage selon la revendication 1, **caractérisé en ce que** le mécanisme de commande est associé à un bras de levier (9) de la pièce de fermeture (7).

3. Dispositif d'ombrage selon la revendication 2, **caractérisé en ce que** le mécanisme de commande comprend une coulisse de commande (10) disposée dans la région du bras de levier (9) ainsi qu'une came de commande (11) mobile le long de la coulisse de commande (10), dans lequel la coulisse de commande (10) présente sections de voie de coulisse différentes définissant les deux positions d'ouverture de la pièce de fermeture (7).

4. Dispositif d'ombrage selon la revendication 3, **caractérisé en ce que** la coulisse de commande (10) est arrangée sur le bras de levier (9).

5. Dispositif d'ombrage selon l'une quelconque des revendications précédentes, **caractérisé en ce que** la coulisse de commande est arrangée sur une voie de guidage pour la came de commande.

6. Dispositif d'ombrage selon au moins une des revendications précédentes, **caractérisé en ce que** le système d'entraînement comprend deux brins de traction-pression (12) pliables, s'étendant longitudinalement et reliés de façon active sur une région d'extrémité frontale au profilé de tirage (6) pour un déplacement parallèle, dans lequel au moins un brin de traction-pression (12) avec sa région d'extrémité frontale opposée est guidé dans un guidage de commande (16) dans la région du bras de levier (9).

7. Dispositif d'ombrage selon la revendication 6, **caractérisé en ce que** la région d'extrémité frontale du brin de traction-pression (12) est pourvue de la came de commande (11).

8. Dispositif d'ombrage selon l'une quelconque des revendications précédentes, **caractérisé en ce que** le guidage de commande comporte les sections de voie de coulisse de la coulisse de commande.

9. Dispositif d'ombrage selon l'une quelconque des revendications précédentes, **caractérisé en ce qu'**une butée de support (13) activable et désactivable par la région d'extrémité frontale du brin de traction-pression (12) est prévue, la butée retenant la pièce de fermeture (7) dans l'une des deux positions d'ouverture.
